# EUROPEAN PATENT SPECIFICATION

(11) **EP 1 673 757 B1**
(45) Date of publication and mention of the grant of the patent: **03.07.2013**
(21) Application number: 04770148.7
(22) Date of filing: 01.10.2004
(51) Int. Cl.: G09G 3/34, G02B 26/02

(54) **Electrowetting display device**
Elektrowettinganzeige
Dispositif d'affichage a electromouillage

(30) Priority: 08.10.2003 EP 03256349
(43) Date of publication of application: 28.06.2006
(73) Proprietor: Samsung LCD Netherlands R&D Center B.V., 5651 CA Eindhoven (NL)
(72) Inventor: ZHOU, Guofu, NL-5656 AA Eindhoven (NL); HAGE, Leendert, M., NL-5656 AA Eindhoven (NL); CORTIE, Rogier, H., M., NL-5656 AA Eindhoven (NL); JOHNSON, Mark, T., NL-5656 AA Eindhoven (NL); FEENSTRA, Bokke, J., NL-5656 AA Eindhoven (NL); HAYES, Robert, A., NL-5656 AA Eindhoven (NL); FRANKLIN, Anthony, R., NL-5656 AA Eindhoven (NL)
(74) Representative: Blaseby, Matthew Peter
(86) International application number: PCT/IB2004/051943
(87) International publication number: WO 2005/036517

(56) References cited:
- EP-A- 1 069 450
- WO-A-03/079323
- JP-A- 2002 169 005
- US-B1- 6 603 444
- HAYES R A ET AL: "Video-speed electronic paper based on electrowetting" NATURE, MACMILLAN JOURNALS LTD. LONDON, GB, vol. 425, no. 6956, 25 September 2003 (2003-09-25), pages 383-385, XP002286158 ISSN: 0028-0836

## Description

The invention relates to a display device comprising picture elements (pixels) having at least one first fluid and a second fluid immiscible with each other above a first transparent support plate, the second fluid being electroconductive or polar.

In general the fluids are contained within a space between the first transparent support plate and a second support plate, but this is not strictly necessary.

If the fluid is a (colored) oil and the second fluid is water (due to interfacial tensions) a two-layer system is provided which comprises a water layer and an oil layer. However, if a voltage is applied between the water and an electrode on the first support plate the oil layer moves aside or breaks up due to electrostatic forces. Since parts of the water now penetrate the oil layer the picture element becomes partly transparent.

Japanese patent application JP-A 2002 169005 discloses an optical element in the form of a variable-focus electrowetting lens. The focal length of the lens can be varied by applying a voltage.

Display devices based on this principle have been described in PCT-Application WO 03/00196 (PH - NL 02.0129).

US 6 603 444 discloses another so-called electro-wetting display device in which the brightness of a certain pixel is controlled by controlling the shape of a plano-convex lens formed at the interface between the two fluids in the pixel. By changing the focal length of the lens, the amount of light which is blocked by a mask positioned between the lens and a user also changes, such that the pixel is perceived as bright or dark. The shape of the lens is controlled by applying a voltage between electrodes in the pixel.

Intermediate optical states or gray levels - the optical states between a first extreme state and a second extreme state said (e.g. fully black and fully white) can be achieved using intermediate DC-voltage levels between the voltage levels introducing said extreme states (e.g. zero and a maximum voltage level). However, in practice the resulting gray-scale stability or reproducibility is experimentally found to be very poor and unacceptable for most applications.

It is one of the objectives of the invention to provide a display having driving means, which give an acceptable gray-scale stability.

According to a first aspect of the present invention, this and other objectives are achieved by a display device as defined in claim 1.

Various embodiments of this first aspect of the invention are defined in the dependent claims.

In further embodiments said driving means provide preceding voltages to a picture element prior to said voltages associated with the electro-optical states. Said preceding voltages for instance comprise a set of alternating voltages having an average value substantially equal to zero or an average value substantially equal to a voltage associated with an electro-optical state of the picture element to be set.

The invention is based on the insight that the application of these preceding voltages improves the homogeneity of the switching behavior of the oil film, avoiding the local spreading of the oil film and reducing the probability of breaking the oil film.

According to a second aspect of the present invention, the above-mentioned and other objectives are achieved by a display device as defined in claim 15.

These and other aspects of the invention will now be elucidated with reference to some non-restricting embodiments and the drawing in which
Fig. 1 shows diagrammatically cross-section of a part of a display device, in which the invention is used,
Fig. 2 schematically shows an electrical equivalent of a display device
Fig. 3 schematically shows a way of driving picture elements in a device according to the invention,
Fig. 4 schematically shows another way of driving picture elements in a device according to the invention,
Fig. 5 schematically shows a way of driving picture elements in another device according to the invention,
Fig. 6 schematically shows another way of driving picture elements in a device according to the invention,
Fig. 7 schematically shows another way of driving picture elements in a device according to the invention,
Fig. 8 schematically shows modifications of Figure 7,while
Fig. 9 schematically shows another way of driving picture elements in a device according to the invention using a reset method.

The Figures are diagrammatic and not drawn to scale. Corresponding elements are generally denoted by the same reference numerals.

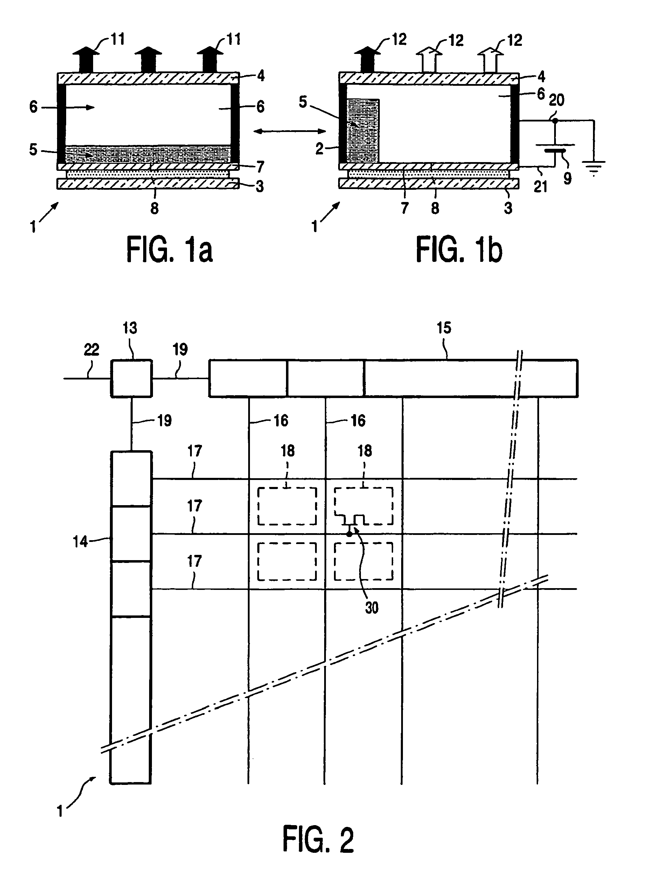

Fig. 1 shows a diagrammatic cross-section of a part of a display device 1 which shows the principle on which a display device according to the invention is based. Between two transparent substrates or support plates 3, 4 a first fluid 5 and a second fluid 6 are provided, which are immiscible with each other. The first fluid 5 is for instance an alkane like hexadecane or as in this example a (silicone) oil. The second fluid 6 is electroconductive or polar, for instance water or a salt solution (e.g. a solution of KCl in a mixture of water and ethyl alcohol).

In a first state, when no external voltage is applied (Fig. 1a) the fluids 5, 6 adjoin the first and second transparent support plates 3, 4 of e.g. glass or plastic. On the first support plate 3 a transparent electrode 7, for example indium (tin) oxide is provided and an intermediate less wettable (hydrophobic) layer 8, in this example an amorphous fluoropolymer (AF1600).

When a voltage is applied (voltage source 9) via interconnections 20, 21 the layer 5 moves aside or breaks up into small droplets (Fig. 1b). This occurs when the electrostatic energy gain is larger than the surface energy loss due to the creation of curved surfaces. As a very important aspect it was found that reversible switching between a continuous film 5 covering the support plate 3 and a film adjoining the wall 2 is achieved by means of the electrical switching means (voltage source 9).

Figure 2 is an electric equivalent circuit diagram of a part of a display device 1 to which the invention is applicable. It comprises in one possible embodiment (one mode of driving, called the "passive mode") a matrix of picture elements 18 at the areas of crossings of row or selection electrodes 17 and column or data electrodes 16. The row electrodes are consecutively selected by means of a row driver 14, while the column electrodes are provided with data via a data register 15. To this end, incoming data 22 are first processed, if necessary, in a processor 13.

Mutual synchronization between the row driver 14 and the data register 15 takes place via drive lines 19. The selection electrodes 17 and data electrodes 16 for example are connected to fluids 5, 6 via separate electrodes either directly as shown by means of electrodes 20, 21 in Figure 1, or via a threshold elements such as a non-linear resistance or a non-linear switching element such as a MIM or a diode. A row of picture elements 18 may be driven by one or more selection electrodes 17; similarly a column of picture elements 18 may be driven by one or more data electrodes 16.

In another possible embodiment (another mode of driving, called the "active mode") signals from the row driver 14 select the picture electrodes via thin-film transistors (TFTs) 30 whose gate electrodes are electrically connected to the row electrodes 17 and the source electrodes are electrically connected to the column electrodes. The signal, which is present at the column electrode 16, is transferred via the TFT to a picture electrode of a picture element 18 coupled to the drain electrode. The other picture electrodes are connected to, for example, one (or more) common counter electrode(s). In Figure 2 only one thin film transistor (TFT) 30 has been drawn, simply as an example. Other "active mode" configurations are alternatively possible. Again one or more selection electrodes 17 may drive a row of TFTs 30, while one or more data electrodes 16.

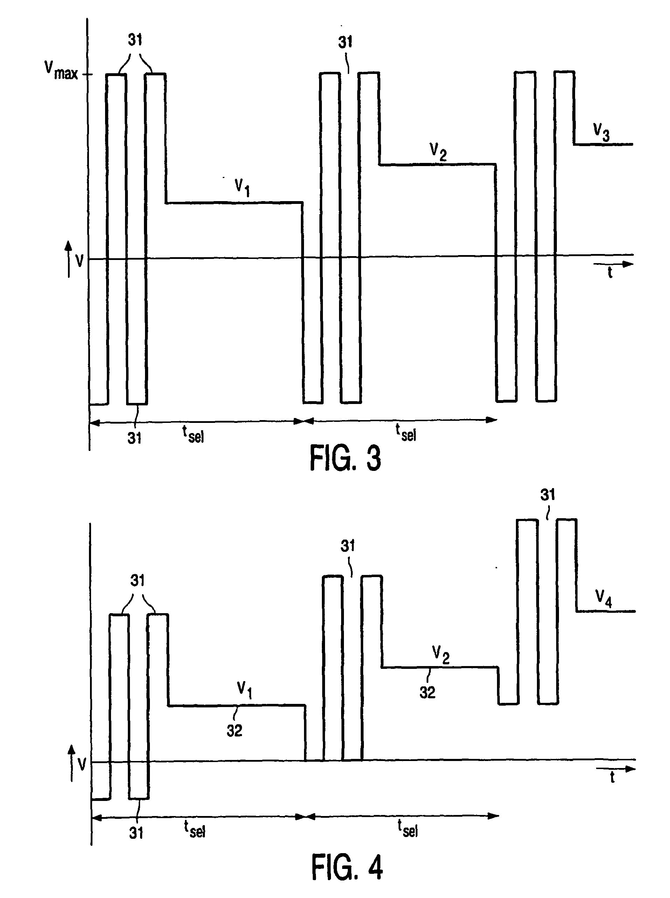

Figure 3 shows a first pulse pattern scheme with four pre-pulses (alternating voltages) 31 prior to a fixed voltage 32 (within a selection period tₛₑₗ) for the display. The value of the fixed voltage 32 (V₁, V₂, V₃) determines the gray value. The pulse length of the pre-pulses is not limited but preferably an order of magnitude shorter than the minimum time period required for driving the display from full black to full white state. It is preferred to use the maximum voltage level Vₘₐₓ which may be available e.g. at a driver IC as the amplitude of these pre-pulses 31. The number of these ac pre-pulses for a grayscale transition may be chosen arbitrarily but an even number is preferred and the total time period of these ac pulses in a grayscale transition is preferably less than 50% of the selection period tₛₑₗ. It appears that the accuracy and stability of the gray levels are improved after using a series of short ac-pulses prior to the gray level driving pulse before each transition. In this example, four short pulses - two negative and two positive pulses are used, the average DC voltage being equal to zero.

A further pulse pattern is schematically shown in Figure 4, in which a series of short pre-pulses 31 is provided prior to the grayscale driving voltage pulse 32 for each transition. In this example, four short pulses -two negative and two positive pulses are used, the average DC voltage being equal to the gray level voltage (V₁, V₂, V₄). It appears that the pre-pulses are extremely powerful for improving the grayscale reproducibility in electrowetting displays. The pre-pulses however produce an optical response, which may become visible in particular when longer pre-pulses are used. To reduce this optical disturbance induced by the pre-pulses the pre-pulses preferably are applied with different polarity to different parts of the screen.

In the following frame, positive and negative polarities are inverted. The perceptual appearance of the display will be hardly be effected, since the eye averages these short range brightness variations over subsequent frames.

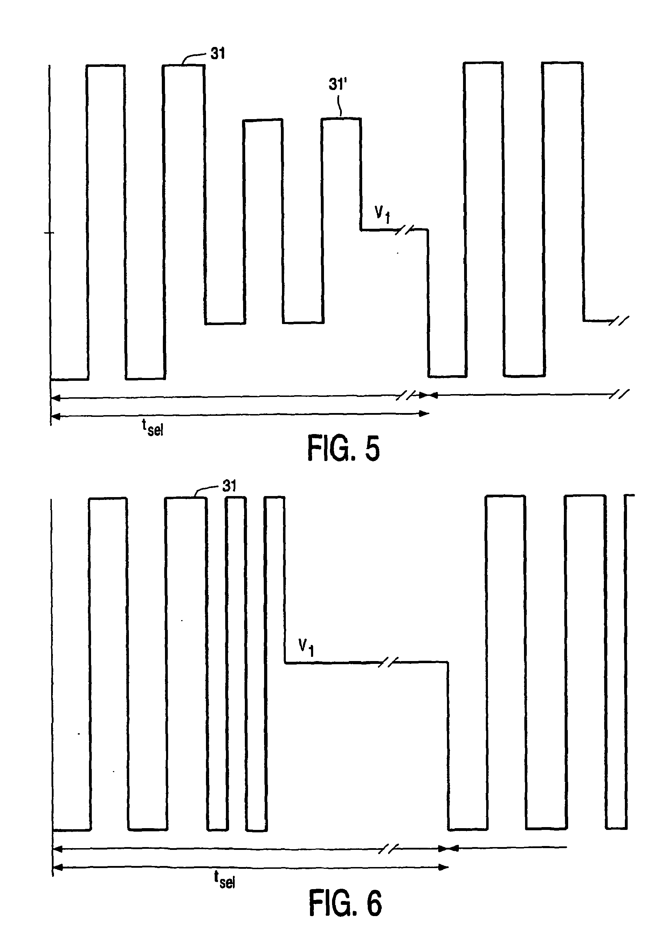

Another possible pulse pattern is schematically shown in Figure 5 in which the pre-pulses 31 have a certain amplitude at the beginning and smaller amplitude (pre-pulses 31') at the end of the pre-pulse sequence. The voltage sweeps between negative and positive voltage decrease, resulting in lower power consumption (especially at a larger number of pre-pulses).

A fourth embodiment is illustrated in Figure 6, in which the ac pulses have a decreased pulse time periods and constant amplitude. The advantage of this embodiment is shortening of the total image update time. In a combined (not shown) embodiment the pre-pulses have both variable amplitude and variable pulse time periods. This gives additional flexibility for an optimal combination leading to minimum image update time, power consumption, lower optical flickers and optimal performance.

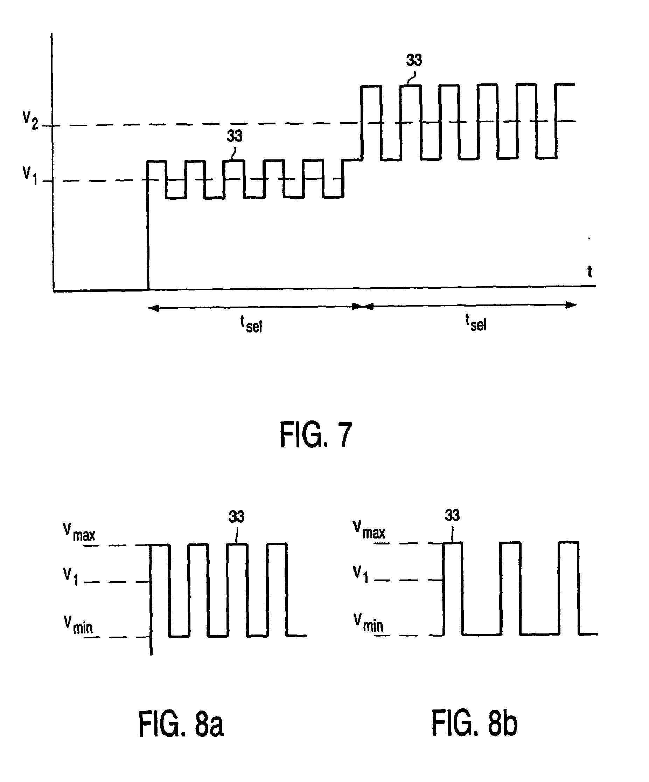

It has further been found that improved grayscale reproducibility and relatively short image update time are obtained by modifying the grayscale driving voltage pulse 32 into a series of short voltage pulses 33 (Figure 7) with alternating amplitude the mean voltage being equal or close to the DC voltage level (V₁,V₂) that is required for driving the display to the desired gray level. Although not shown, the short voltage pulses 33 may be preceded by pre-pulses, similar to those in the embodiments of Figures 3-6.

Figure 8^{a} shows a modification in which a series of such short voltage pulses 33 with a RMS (root mean square) average voltage √[(Vₘₐₓ²+Vₘᵢₙ²)/2] approximately equal to the DC voltage level that is required for driving the display to the desired gray level (V₁) as does Figure 8^{b}, in which a series of short voltage pulses has asymmetric time periods with a RMS average voltage, which is again approximately equal to the DC voltage level that is required for driving the display to the desired gray level.

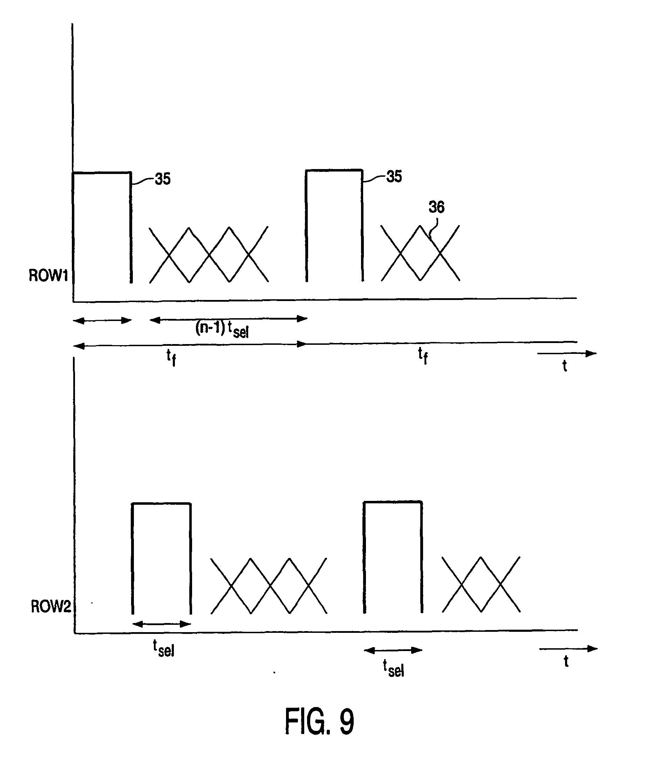

Figure 9 shows a way of driving the display by using a reset pulse 35 bringing the picture element into one of the extreme states (either fully on or fully off) before applying the grayscale driving pulses 36 for a grayscale transition. The length of this reset pulse is not limited but preferably as short as possible, e.g. less than 50% of the total addressing time, depending on the application and the properties of the display element. Since the response time and consequently resetting depends on the previous gray value, the reset pulse should have a reset voltage and a pulse width (total pulse energy) to reset all possible gray values to the initial state.

If the properties (especially response time) of the display element are such that a longer reset time is needed, in matrix driving the reset pulse may be given during a selection time of a row of display elements (line), which is a certain period ahead of the selection time for presenting information to the same row of display elements (it may even be applied in an earlier frame time).

The invention is not restricted to the examples mentioned above. If a difference in switching on and switching off speed exists, the RMS requirement of Figures 7, 8 may not give the correct gray-value. The average voltage level among these short pulses should then be selected so that the resulting reflection vs time curve fits to the gray-scale driving voltage vs time curve. The gray-levels will then not drift away by and image quality is significantly improved whist the image update time remains short. The use of the asymmetric pulses allows one to finely tune the pulses in order to achieve accurate gray - scales.

Part of the display may be driven in another drive mode than another part and within a certain mode, frequencies may differ for different parts of the display as may voltage values and polarities of preceding voltages.

Although a display device between two transparent substrates has been shown the support plate 7 comprising the electrodes 7 and the oil layer 5 (Figure 1a) may even be immersed in an open water container.

The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

## Claims

1. A display device having at least one picture element (18) having an optical switch comprising at least one first fluid (5) and a second fluid (6) immiscible with each other above a first support plate (3), the second fluid being electro-conductive or polar which display device has driving means (13,14,15) for applying to electrodes (7, 20, 21) of the optical switch voltages associated with a range of electro-optical states of the picture element between and including a first extreme state and a second extreme state, **characterized in that** said driving means are adapted to provide, during driving of the picture element to a gray level associated with an electro-optical state of the picture element, a pulse pattern scheme comprising any number of ac pulses prior to a fixed gray level voltage.

2. A display device according to claim 1 comprising the fluids within a space between a first transparent support plate (3) and a second support plate (4).

3. A display device according to claim 1, wherein the pulse pattern scheme comprises a set of alternating voltages (33) having a mean value substantially equal to the gray level voltage (V1) associated with an electro-optical state of the picture element to be set.

4. A display device according to claim 3, wherein the pulse pattern scheme comprises a DC part and an AC part the maximum and minimum voltages of the number of ac pulses having a root mean square average value substantially equal to the gray level voltage associated with an electro-optical state of the picture element to be set.

5. A display device according to claim 4 comprising different time periods for parts of the pulse pattern scheme having voltage values above said root mean square average value and parts of the pulse pattern scheme having voltage values below said root mean square average value.

6. A display device according to claims 1 or 3, wherein said pulse pattern scheme comprises:
a set of pre-pulses (31, 31¹, 35) including said number of ac pulses.

7. A display device according to claim 6, wherein said set of pre-pulses comprises a set of alternating voltages having an average value substantially equal to zero.

8. A display device according to claim 6, wherein said set of pre-pulses comprises a set of alternating voltages having an average value substantially equal to the gray level voltage associated with an electro-optical state of the picture element to be set.

9. A display device according to claim 7 or 8, wherein, in driving at least one picture element, a pre-pulse amplitude decreases.

10. A display device according to claim 7 or 8, wherein, in driving at least one picture element, a pre-pulse frequency increases.

11. A display device according to claim 7 or 8, wherein said pre-pulses have different values for different parts of the display.

12. A display device according to claim 7 or 8, wherein said pre-pulses have different polarities for different parts of the display.

13. A display device according to claim 6, wherein said set of pre-pulses comprises a voltage pulse to said picture element bringing the picture element into one of the extreme states.

14. A display device according to claim 1 or 3, wherein said driving means are adapted to provide to said picture element, in a frame following a previous frame, driving voltages of opposite polarity than driving voltages provided in the previous frame.

15. A display device having at least one picture element having an optical switch comprising at least one first fluid and a second fluid immiscible with each other within a space on a first transparent support plate, the second fluid being electro-conductive or polar which display device has driving means for applying voltages to the electrodes associated with a range of electro-optical states of the picture element between and including a first extreme state and a second extreme state, **characterized in that** said driving means are adapted to provide, prior to driving the picture element to a gray level associated with an electro-optical state of the picture element, a reset voltage pulse to said picture element to bring the picture element into one of the extreme states.

16. A display device according to claim 15 comprising the fluids within a space between a first transparent support plate (3) and a second support plate (4).

17. A display device according to claim 15 said driving means providing gray level voltages associated with a range of electro-optical states after bringing the picture element into one of the extreme states.

## Patentansprüche

1. Anzeigevorrichtung mit wenigstens einem Bildelement (18) mit einem optischen Schalter, der wenigstens ein erstes Fluid (5) und ein zweites Fluid (6), die miteinander unmischbar sind, über einer ersten Aufnahmeplatte aufweist, wobei das zweite Fluid elektrisch leitfähig oder polar ist, wobei die Anzeigevorrichtung Steuermittel (13, 14, 15) aufweist, um an die Elektroden (7, 20, 21) des optischen Schalters Spannungen anzulegen, die einem Bereich elektro-optischer Zustände des Bildelementes zugeordnet sind und zwischen einem ersten extremen Zustand und einem zweiten extremen Zustand liegen und diese beinhalten,
**dadurch gekennzeichnet, dass**
die Steuermittel dazu vorbereitet sind, während die Bildelemente auf einen Graulevel gesteuert werden, der einem elektro-optischen Zustand des Bildelementes zugeordnet ist, ein Pulsmusterschema bereitzustellen, das jede Anzahl von ac-Pulsen vor einer festen Graulevelspannung umfasst.

2. Anzeigevorrichtung nach Anspruch 1, die die Fluids in einem Zwischenraum zwischen einer ersten transparenten Aufnahmeplatte (3) und einer zweiten Aufnahmeplatte (4) aufweist.

3. Anzeigevorrichtung nach Anspruch 1, wobei das Pulsmusterschema einen Satz alternierender Spannungen (33) aufweist, die einen mittleren Wert aufweisen, der im Wesentlichen der Graulevelspannung (V1) entspricht, die einem elektro-optischen Zustand des einzustellenden Bildelementes zugeordnet ist.

4. Anzeigevorrichtung nach Anspruch 3, wobei das Pulsmusterschema einen DC-Teil und einen AC-Teil umfasst und die Maximum- und Minimumspannungen der Anzahl der ac-Pulse einen kleinsten quadratischen Mittelwert haben, der im Wesentlichen der Graulevelspannung entspricht, die einem elektro-optischen Zustand des einzustellenden Bildelementes zugeordnet ist.

5. Anzeigevorrichtung nach Anspruch 4, die unterschiedliche Zeitperioden für Teile des Pulsmusterschemas aufweist, die Spannungswerte über dem quadratischen Mittelwert aufweisen und für Teile des Pulsmusterschemas, die Spannungswerte unterhalb des quadratischen Mittelwerts aufweisen.

6. Anzeigevorrichtung nach Anspruch 1 oder 3, wobei das Pulsmusterschema einen Satz von Vorpulsen (31, 31¹, 35) umfasst, die die Anzahl von ac-Pulsen beinhalten.

7. Anzeigevorrichtung nach Anspruch 6, wobei die Vorpulse einen Satz alternierender Spannungen mit einem Durchschnittswert umfassen, der im Wesentlichen 0 entspricht.

8. Anzeigevorrichtung nach Anspruch 6, wobei der Satz der Vorpulse einen Satz alternierender Spannungen umfasst, die einen mittleren Wert haben, der im Wesentlichen der Graulevelspannung entspricht, die einem elektro-optischen Zustand des einzustellenden Bildelementes zugeordnet ist.

9. Anzeigevorrichtung nach Anspruch 7 oder 8, wobei beim Steuern wenigstens eines Bildelementes wenigstens eine Vorpulsamplitude abnimmt.

10. Anzeigevorrichtung nach Anspruch 7 oder 8, wobei beim Ansteuern wenigstens eines Bildelementes eine Vorpulsfrequenz abnimmt.

11. Anzeigevorrichtung nach Anspruch 7 oder 8, wobei die Vorpulse unterschiedliche Werte für unterschiedliche Teile der Anzeige haben.

12. Anzeigevorrichtung nach Anspruch 7 oder 8, wobei die Vorpulse unterschiedliche Polaritäten für unterschiedliche Teile der Anzeige haben.

13. Anzeigevorrichtung nach Anspruch 6, wobei der Satz der Vorpulse einen Spannungspuls für das Bildelement aufweist, der das Bildelement in einen der Extremzustände bringt.

14. Anzeigevorrichtung nach Anspruch 1 oder 3, wobei die Steuermittel dazu vorbereitet sind am Bildelement in einem Frame, der einem vorigen Frame folgt, Steuerspannungen entgegengesetzter Polarität anzulegen, im Vergleich zu Steuerspannungen, die in dem vorigen Frame angelegt wurden.

15. Anzeigevorrichtung mit wenigstens einem Bildelement mit einem optischen Schalter, der wenigstens ein erstes Fluid und ein zweites Fluid, die untereinander unmischbar sind, in einem Raum auf einer ersten transparenten Aufnahmeplatte umfasst, wobei das zweite Fluid elektrisch leitend oder polar ist und wobei die Anzeigevorrichtung Steuermittel aufweist zum Anlegen von Spannungen an Elektroden, die einem Bereich elektro-optischer Zustände des Bildelementes zugeordnet sind, die zwischen einem ersten Extremzustand und einem zweiten Extremzustand liegen und diese beinhalten,
**dadurch gekennzeichnet, dass**
die Steuermittel dazu vorbereitet sind vor dem Steuern des Bildelementes auf einen Graulevel, der einem elektro-optischen Zustand des Bildelementes zugeordnet ist, einen Resetspannungspuls am Bildelement anzulegen, um das Bildelement in einen der Extremzustände zu bringen.

16. Anzeigevorrichtung nach Anspruch 15, die die Fluide in einem Raum zwischen einer ersten transparenten Aufnahmeplatte (3) und einer zweiten Aufnahmeplatte (4) aufweist.

17. Anzeigevorrichtung nach Anspruch 15, wobei die Steuermittel Graulevelspannungen bereitstellen, die einem Bereich elektro-optischer Zustände nach dem Versetzen der Bildelemente in einen der Extremzustände zugeordnet sind.

## Revendications

1. Dispositif d'affichage ayant au moins un élément d'image (18) ayant un commutateur optique comprenant au moins un premier fluide (5) et un deuxième fluide (6) immiscibles l'un avec l'autre au-dessus d'une première plaque de support (3), le deuxième fluide étant électro-conducteur ou polaire, lequel dispositif d'affichage comprend des moyens de pilotage (13, 14, 15) pour appliquer à des électrodes (7, 20, 21) du commutateur optique des tensions associées à une plage d'états électro-optiques de l'élément d'image comprises entre et incluant un premier état extrême et un deuxième état extrême, **caractérisé en ce que** lesdits moyens de pilotage sont adaptés pour fournir, durant le pilotage de l'élément d'image à un niveau de gris associé à un état électro-optique de l'élément d'image, un schéma de motif d'impulsion comprenant n'importe quelle pluralité d'impulsions de courant alternatif avant une tension de niveau de gris fixe.

2. Dispositif d'affichage selon la revendication 1, comprenant les fluides à l'intérieur d'un espace entre une première plaque de support transparente (3) et une deuxième plaque de support (4).

3. Dispositif d'affichage selon la revendication 1, dans lequel le schéma de motif d'impulsions comprend un ensemble de tensions alternatives (33) ayant une valeur moyenne sensiblement égale à la tension de niveau de gris (V1) associée à un état électro-optique de l'élément d'image à régler.

4. Dispositif d'affichage selon la revendication 3, dans lequel le schéma de motif d'impulsions comprend une partie de courant continu et une partie de courant alternatif, les tensions maximale et minimale de la pluralité d'impulsions de courant alternatif ayant une valeur moyenne quadratique sensiblement égale à la tension de niveau de gris associée à un état électro-optique de l'élément d'image à régler.

5. Dispositif d'affichage selon la revendication 4, comprenant des périodes de temps différentes pour des parties du schéma de motif d'impulsions ayant des valeurs de tension au-dessus de ladite valeur moyenne quadratique et des parties du schéma de motif d'impulsions ayant des valeurs de tension au-dessous de ladite valeur moyenne quadratique.

6. Dispositif d'affichage selon les revendications 1 ou 3, dans lequel ledit schéma de motif d'impulsions comprend :
un ensemble de pré-impulsions (31, 31', 35) comprenant ladite pluralité d'impulsions de courant alternatif.

7. Dispositif d'affichage selon la revendication 6, dans lequel ledit ensemble de pré-impulsions comprend un ensemble de tensions alternatives ayant une valeur moyenne sensiblement égale à zéro.

8. Dispositif d'affichage selon la revendication 6, dans lequel ledit ensemble de pré-impulsions comprend un ensemble de tensions alternatives ayant une valeur moyenne sensiblement égale à la tension de niveau de gris associée à un état électro-optique de l'élément d'image à régler.

9. Dispositif d'affichage selon la revendication 7 ou 8, dans lequel, dans le pilotage d'au moins un élément d'image, une amplitude de pré-impulsion diminue.

10. Dispositif d'affichage selon la revendication 7 ou 8, dans lequel, dans le pilotage d'au moins un élément d'image, une fréquence de pré-impulsion augmente.

11. Dispositif d'affichage selon la revendication 7 ou 8, dans lequel lesdites pré-impulsions ont des valeurs différentes pour différentes parties de l'affichage.

12. Dispositif d'affichage selon la revendication 7 ou 8, dans lequel lesdites pré-impulsions ont des polarités différentes pour différentes parties de l'affichage.

13. Dispositif d'affichage selon la revendication 6, dans lequel ledit ensemble de pré-impulsions comprend une impulsion de tension pour ledit élément d'image amenant l'élément d'image dans un des états extrêmes.

14. Dispositif d'affichage selon la revendication 1 ou 3, dans lequel lesdits moyens de pilotage sont adaptés pour fournir audit élément d'image, dans une trame suivant une trame précédente, des tensions de pilotage de polarité opposée par rapport à des tensions de pilotage fournies dans la trame précédente.

15. Dispositif d'affichage ayant au moins un élément d'image ayant un commutateur optique comprenant au moins un premier fluide et un deuxième fluide immiscibles l'un avec l'autre dans un espace sur une première plaque de support transparente, le deuxième fluide étant électro-conducteur ou polaire, lequel dispositif d'affichage comprend des moyens de pilotage pour appliquer des tensions aux électrodes associées à une plage d'états électro-optiques de l'élément d'image comprises entre et incluant un premier état extrême et un deuxième état extrême, **caractérisé en ce que** lesdits moyens de pilotage sont adaptés pour fournir, avant le pilotage de l'élément d'image à un niveau de gris associé à un état électro-optique de l'élément d'image, une impulsion de tension de réinitialisation audit élément d'image pour amener l'élément d'image dans un des états extrêmes.

16. Dispositif d'affichage selon la revendication 15, comprenant les fluides à l'intérieur d'un espace entre une première plaque de support transparente (3) et une deuxième plaque de support (4).

17. Dispositif d'affichage selon la revendication 15, lesdits moyens de pilotage fournissant des tensions de niveau de gris associées à une plage d'états électro-optiques après avoir amené l'élément d'image dans un des états extrêmes.
